(19) **Europäisches Patentamt / European Patent Office / Office européen des brevets**

(11) **EP 4 119 413 A1**

(12) # EUROPEAN PATENT APPLICATION
published in accordance with Art. 153(4) EPC

(43) Date of publication:
**18.01.2023 Bulletin 2023/03**

(21) Application number: **21926046.0**

(22) Date of filing: **09.08.2021**

(51) International Patent Classification (IPC):
**B60W 60/00** (2020.01)     **G05D 1/02** (2020.01)

(86) International application number:
**PCT/CN2021/111408**

(87) International publication number:
**WO 2022/252390 (08.12.2022 Gazette 2022/49)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **01.06.2021  CN 202110606057**

(71) Applicant: **NEOLIX TECHNOLOGIES CO., LTD.**
**Beijing 100176 (CN)**

(72) Inventor: **LIU, Bing**
**Beijing 100176 (CN)**

(74) Representative: **Neusser, Sebastian**
**Kraus & Weisert**
**Patentanwälte PartGmbB**
**Thomas-Wimmer-Ring 15**
**80539 München (DE)**

(54) **ERROR COMPENSATION METHOD AND APPARATUS, COMPUTER DEVICE, AND STORAGE MEDIUM**

(57)     The present disclosure relates to the field of unmanned driving technologies, and provides an error compensation method and apparatus, a computer device and a storage medium. The method is applied to an unmanned driving device, namely a self-driving device or an unmanned vehicle, and includes: a first coordinate system is established based on a reference point closest to a target point, a first coordinate of the target point in the first coordinate system and a second coordinate of the reference point in a second coordinate system are acquired; and a third coordinate of the target point in the second coordinate system is calculated based on the first coordinate and the second coordinate to compensate a conversion error from the first coordinate system to the second coordinate system. According to the present disclosure, the conversion error from the first coordinate system to the second coordinate system can be corrected, and the time consumed by the conversion can be reduced.

FIG. 1

EP 4 119 413 A1

**Description**

This application is based upon and claims priority to Chinese Patent Application No. 202110606057.6, filed June 1, 2021, and the entire contents of which are incorporated herein by reference.

**TECHNICAL FIELD**

The present disclosure relates to the field of unmanned driving technologies, and in particular to an error compensation method and apparatus, a computer device, and a computer readable storage medium.

**BACKGROUND**

Unmanned driving vehicles, also known as self-driving vehicles, unmanned vehicles or wheeled mobile robots, are integrated and intelligent next-generation technology products that integrate environmental awareness, path planning, state identification and vehicle control. By equipping the unmanned driving vehicles with intelligent software and various sensing devices, unmanned driving can be realized.

In the unmanned driving technologies, a trajectory planning, as a high-dimensional optimization problem with multiple nonlinear constraints, needs to consume a lot of computing resources; and due to complexity and real-time requirements of scenes, an optimal trajectory cannot always be quickly and simply obtained. Therefore, there are relatively high requirements for the robustness and practicality of planning algorithms.

In the prior art, the most commonly used coordinate systems are a Cartesian coordinate system and a Frenet coordinate system. For motion planning, the use of the Frenet coordinate system is based on the conversion of reference line data in the Cartesian coordinate system, that is, a coordinate of a target point in the Frenet coordinate system is calculated based on a coordinate of the nearest reference point in the Frenet coordinate system. However, there is a conversion error in this method. Further, in order to ensure the highest accuracy, it is usually necessary to traverse all the reference points, resulting that the conversion consumes relatively large time.

**SUMMARY**

In view of this, embodiments of the present disclosure provide an error compensation method and apparatus, a computer device, and a computer readable storage medium, so as to solve problems in the prior art that there is the conversion error while calculating the coordinate of the target point in the Frenet coordinate system based on the coordinate of the nearest reference point in the Frenet coordinate system, and the time consumed by the conversion is relatively large.

According to a first aspect of the embodiments of the present disclosure, there is provided an error compensation method, including: establishing a first coordinate system based on a reference point closest to a target point; acquiring a first coordinate of the target point in the first coordinate system and a second coordinate of the reference point in a second coordinate system; and calculating a third coordinate of the target point in the second coordinate system based on the first coordinate and the second coordinate to compensate a conversion error from the first coordinate system to the second coordinate system.

According to a second aspect of the embodiments of the present disclosure, there is provided an error compensation apparatus, including: an establishing module configured to establish a first coordinate system based on a reference point closest to a target point; an acquisition module configured to acquire a first coordinate of the target point in the first coordinate system and a second coordinate of the reference point in a second coordinate system; and a calculation module configured to calculate a third coordinate of the target point in the second coordinate system based on the first coordinate and the second coordinate to compensate a conversion error from the first coordinate system to the second coordinate system.

According to a third aspect of the embodiments of the present disclosure, there is provided a computer device, including: a memory; a processor; and a computer program stored in the memory and executable on the processor, wherein the computer program, when executed by the processor, causing the processor to implement the steps of the foregoing method.

According to a fourth aspect of the embodiments of the present disclosure, there is provided a computer readable storage medium storing a computer program, wherein the computer program, when executed by a processor, causing the processor to implement the steps of the foregoing method.

Compared with the prior art, the embodiments of the present disclosure have following beneficial effects: by establishing a first coordinate system based on a reference point closest to a target point, acquiring a first coordinate of the target point in the first coordinate system and a second coordinate of the reference point in a second coordinate system, and calculating a third coordinate of the target point in the second coordinate system based on the first coordinate and the second coordinate to compensate a conversion error from the first coordinate system to the second coordinate system, the conversion error from the first coordinate system to the second coordinate system can be corrected, and the time consumed by the conversion can be reduced.

**BRIEF DESCRIPTION OF THE DRAWINGS**

In order to more clearly illustrate the technical solutions in the embodiments of the present disclosure, the accompanying drawings used in the description of the embodiments or the prior art will be briefly introduced below. It is apparent that, the accompanying drawings in the following description are only some embodiments of the present disclosure, and other drawings can be obtained by those of ordinary skill in the art from the provided drawings without creative efforts.

FIG. 1 is a schematic diagram of calculating a coordinate of a target point based on a coordinate of the nearest reference point in the related art.
FIG. 2 is a flowchart illustrating an error compensation method according to an embodiment of the present disclosure.
FIG. 3 is a flowchart illustrating an error compensation method according to an embodiment of the present disclosure.
FIG. 4 is a schematic diagram of calculating a coordinate of a target point based on a coordinate of the nearest reference point according to an embodiment of the present disclosure.
FIG. 5 is a block diagram illustrating an error compensation apparatus according to an embodiment of the present disclosure.
FIG. 6 is a schematic diagram illustrating a computer device according to an embodiment of the present disclosure.

**DETAILED DESCRIPTION OF THE EMBODIMENTS**

In the following description, for the purpose of illustration instead of limitation, specific details such as a particular system structure and a technology are provided to make the embodiments of the present disclosure understood thoroughly. However, it should be understood by a person skilled in the art that the present disclosure can also be implemented in other embodiments without the specific details. In other cases, detailed descriptions of well-known systems, apparatuses, circuits and methods are omitted, so that the present disclosure is described without being impeded by unnecessary details.

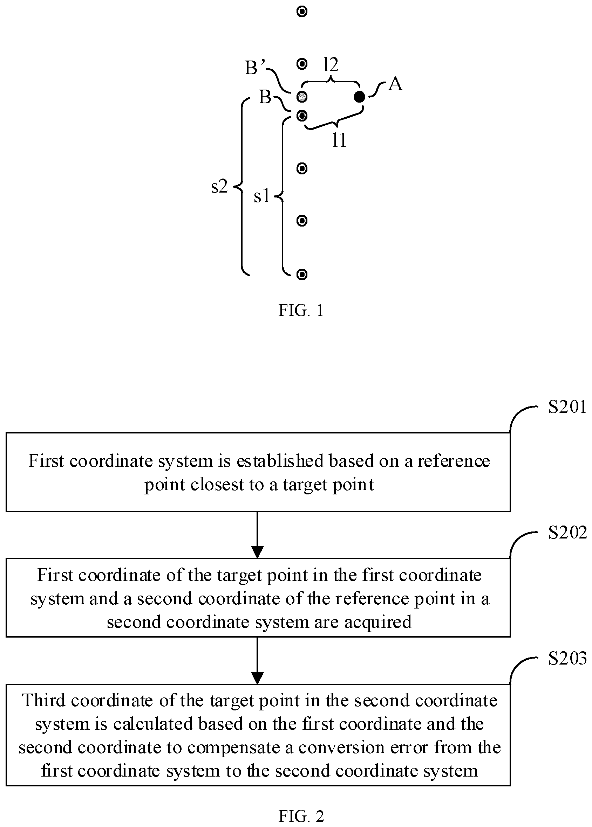

FIG. 1 is a schematic diagram of calculating a coordinate of a target point based on a coordinate of the nearest reference point in the related art.
As shown in FIG. 1, A is a target point, a coordinate of the target point A is (s, 1), and B is a nearest reference point found through traversal. In a conversion process from a Cartesian coordinate system to a Frenet coordinate system, a converted coordinate of the target point A calculated based on the coordinate of the target point A and a coordinate of the reference point B is (s1, 11). However, since there is an error in the conversion process of the coordinate system, the nearest reference point should actually be B', that is, the converted coordinate of the target point A calculated based on the coordinate of the target point A and a coordinate of the reference point B' should be (s2,l2), not (s1, l1).
As can be seen, there are at least following problems in the related art: in the conversion process from the Cartesian coordinate system to the Frenet coordinate system, when calculating the coordinate of the target point based on the coordinate of the nearest reference point, there may be a conversion error; further, in order to ensure the highest accuracy, it is necessary to traverse all the reference points one by one, resulting that the conversion consumes relatively large time.
FIG. 2 is a flowchart illustrating an error compensation method according to an embodiment of the present disclosure. The error compensation method of FIG. 2 can be performed by a server. As shown in FIG. 2, the error compensation method includes following steps.
S201, a first coordinate system is established based on a reference point closest to a target point.
S202, a first coordinate of the target point in the first coordinate system and a second coordinate of the reference point in a second coordinate system are acquired.
S203, a third coordinate of the target point in the second coordinate system is calculated based on the first coordinate and the second coordinate to compensate a conversion error from the first coordinate system to the second coordinate system.
Specifically, after the reference point closest to the target point is found, the server establishes the first coordinate system based on the reference point. Further, the server acquires the first coordinate of the target point in the first coordinate system and the second coordinate of the reference point in the second coordinate system, and calculates the third coordinate of the target point in the second coordinate system based on the first coordinate and the second coordinate, so as to compensate the conversion error from the first coordinate system to the second coordinate system.
Herein, the first coordinate system is a local Cartesian coordinate system (Cartesian Coordinates). A Cartesian coordinate system is a general name of a rectangular coordinate system and an oblique coordinate system. Two number axes intersecting at an origin form a plane affine coordinate system, and if units of measurement on the two number axes are equal, the affine coordinate system is called the Cartesian coordinate system. A Cartesian coordinate system with two number axes perpendicular to each other is called a Cartesian rectangular coordinate system; otherwise, it is called a Cartesian oblique coordinate system.

The second coordinate system is a Frenet coordinate system (Frenet Coordinates). The Frenet coordinate system is a coordinate system that represents a position of a road in a more intuitive way than the traditional Cartesian coordinate system. The Frenet coordinate system describes a position of a vehicle relative to the road. In the Frenet coordinate system, a center line of the road is used as a reference line, and a tangent vector and a normal vector of the reference line are used to establish a coordinate system, which is the Frenet coordinate system. The Frenet coordinate system takes the vehicle itself as the origin, and coordinate axes are perpendicular to each other and divided into a longitudinal direction and a lateral direction, where a direction along the reference line is called the longitudinal direction, and a current normal direction of the reference line is called the lateral direction.

Compared with the Cartesian coordinate system, the Frenet coordinate system obviously simplifies the problem. Since the reference line of the road (i.e., the center line of the road) can always be simply found during road driving, a representation of the position based on the reference line can be simply described by using a longitudinal distance (i.e., a distance along a direction of the road) and a lateral distance (i.e., a distance from the reference line).

The target point refers to a vehicle driving on the road, wherein the vehicle may be a motor vehicle such as a car, a recreational vehicle (RV), a truck, an off-road vehicle, a sport utility vehicle (SUV), an electric vehicle, or a bicycle, which is not limited thereto in the embodiments of the present disclosure. The reference point refers to a projection point of the target point on the reference line of the road.

The server may be a server that provides various services, for example, a background server that acquires the first coordinate of the target point in the first coordinate system and the second coordinate of the reference point in the second coordinate system, and the background server can calculate the third coordinate of the target point in the second coordinate system based on the acquired first coordinate and second coordinate. The server may be one server, a server cluster composed of several servers, or a cloud computing service center, which is not limited thereto in the embodiments of the present disclosure. Further, the server may be hardware or software, when the server is the hardware, the server may be various electronic devices that provide various services; and when the server is the software, the server can be implemented as a plurality of software or software modules that provide various services, or can be implemented as a single software or software module that provides various services, which is not limited thereto in the embodiments of the present disclosure.

According to the technical solutions provided by the embodiments of the present disclosure, by establishing a first coordinate system based on a reference point closest to a target point, acquiring a first coordinate of the target point in the first coordinate system and a second coordinate of the reference point in a second coordinate system, and calculating a third coordinate of the target point in the second coordinate system based on the first coordinate and the second coordinate to compensate a conversion error from the first coordinate system to the second coordinate system, the conversion error from the first coordinate system to the second coordinate system can be corrected, and the time consumed by the conversion can be reduced.

In some embodiments, establishing the first coordinate system based on the reference point closest to the target point includes: traversing one or more candidate reference points on a reference line in a third coordinate system to obtain the reference point closest to the target point in the one or more candidate reference points; and establishing the first coordinate system based on the reference point.

Specifically, the server acquires one or more candidate reference points on the reference line in the third coordinate system, and traverses one or more candidate reference points to obtain a reference point closest to the target point in one or more candidate reference points. Further, the server establishes a first coordinate system (that is, the local Cartesian coordinate system) based on the reference point.

Herein, the third coordinate system is a geodetic coordinate system. The geodetic coordinate system is a coordinate system established by taking a surface of reference ellipsoid as a reference plane in a geodetic survey, and positions of ground points are represented by geodetic longitude, geodetic latitude and geodetic height.

Traversal refers to visiting each node in a tree (or graph) in turn along a certain search route. A traversal method may be to traverse one or more candidate reference points one by one in a top-to-bottom order, to perform a jump point traversal on one or more candidate reference points at a preset interval, or to perform a bisection traversal on one or more candidate reference points, which is not limited thereto in the embodiments of the present disclosure. Herein, the jump point traversal, also known as a jump point search algorithm, is a path-finding algorithm based on grids, which further optimizes the operation of a A* algorithm to find successor nodes while retaining the framework of the A* algorithm. The bisection traversal, also known as a bisection method or a binary search, is a search algorithm for finding a specific element in an ordered array. It should be noted that different traversal methods have different order of accessing nodes.

Further, the preset interval may be an interval preset by a user according to experience data, or an interval obtained after the user adjusts the set interval according to actual needs, which is not limited thereto in the embodiments of the present disclosure. For example, the preset interval can be 2, 3, 5, and the like. Preferably, in the embodiments of the present disclosure, the preset interval is 2, that is, when traversing reference points on the reference line, the traversal can be performed at an interval of 2 points.

It should be noted that both the geodetic coordinate system and the local Cartesian coordinate system are the Cartesian rectangular coordinate system.

According to the technical solutions provided by the embodiments of the present disclosure, by traversing the reference points with different traversal methods, the search density of the reference points on the reference line can be reduced, and the computing power can be reduced.

In some embodiments, establishing the first coordinate system based on the reference point closest to the target point includes: when the target point is not on the reference line, establishing the first coordinate system by taking the reference point as an origin and a heading of the reference point as a positive direction of a y axis.

Specifically, when it is detected that the target point is not on the reference line, the server establishes a first coordinate system (that is, the local Cartesian coordinate system) by taking the reference point closest to the target point as the origin and the heading of the reference point as the positive direction of the y axis.

Herein, the heading refers to a direction which a head of the vehicle at a sampling position points to. The heading can be directly obtained from trajectory data of the vehicle, or can be determined by using a positioning device such as GPS, or can also be expressed by a slope of a fitting trajectory, which is not limited thereto in the embodiments of the present disclosure.

The fitting trajectory can be understood as a curve formed by establishing a mathematical model based on driving coordinates of the vehicle in a historical driving trajectory, interpolating the driving coordinates, and connecting interpolation points with a series of tiny straight line segments. Further, after the fitting trajectory is formed, a driving coordinate closest to a current driving time on the fitting trajectory is taken as a tangent line of the fitting trajectory, and a slope of the tangent line is taken as a slope of the fitting trajectory, that is, the slope of the fitting trajectory can be used to represent the heading of the target vehicle closest to the current driving time.

In some embodiments, establishing the first coordinate system based on the reference point closest to the target point includes: when the target point is a front most point or a rear most point on the reference line, establishing the first coordinate system by taking a first point or a last point in one or more candidate reference points as an origin and a heading of the first point or the last point as a positive direction of a y axis.

Specifically, when it is detected that the target point is at the foremost or the rearmost of the reference line, the first coordinate system (i.e., local Cartesian coordinate system) is established by taking a first point or a last point in one or more candidate reference points as an origin and a heading of the first point or the last point as a positive direction of a y axis.

Herein, the first point in one or more candidate reference points refers to a point that is first traversed when traversing one or more candidate reference points, that is, a point with the shortest distance from a foremost target point on the reference line. The last point in one or more candidate reference points refers to a point that is last traversed when traversing one or more candidate reference points, that is, a point with the longest distance from a foremost target point on the reference line.

In some embodiments, calculating the third coordinate of the target point in the second coordinate system based on the first coordinate and the second coordinate to compensate the conversion error from the first coordinate system to the second coordinate system includes: calculating the third coordinate of the target point in the second coordinate system through following formulas based on the first coordinate and the second coordinate: s2=s1+loc_y; and 12=loc_x, where s2 is an abscissa in the third coordinate of the target point in the second coordinate system, 12 is an ordinate in the third coordinate of the target point in the second coordinate system, s1 is an abscissa in the second coordinate of the reference point in the second coordinate system, loc_x is an abscissa in the first coordinate of the target point in the first coordinate system, and loc_y is an ordinate in the first coordinate of the target point in the first coordinate system.

Specifically, after the first coordinate of the target point in the first coordinate system and the second coordinate of the reference point in the second coordinate system are acquired, the server calculates the third coordinate of the target point in the second coordinate system through following formulas based on the first coordinate and the second coordinate:

$$s2 = s1 + loc\_y;$$

and

$$l2 = loc\_x.$$

Herein, s2 is an abscissa in the third coordinate of the target point in the second coordinate system, l2 is an ordinate in the third coordinate of the target point in the second coordinate system, s1 is an abscissa in the second coordinate of the reference point in the second coordinate system, loc x is an abscissa in the first coordinate of the target point in the first coordinate system, and loc_y is an ordinate in the first coordinate of the target point in the first coordinate system.

All the foregoing optional technical solutions may be arbitrarily combined to form an optional embodiment of the present disclosure, and details are not described herein again.

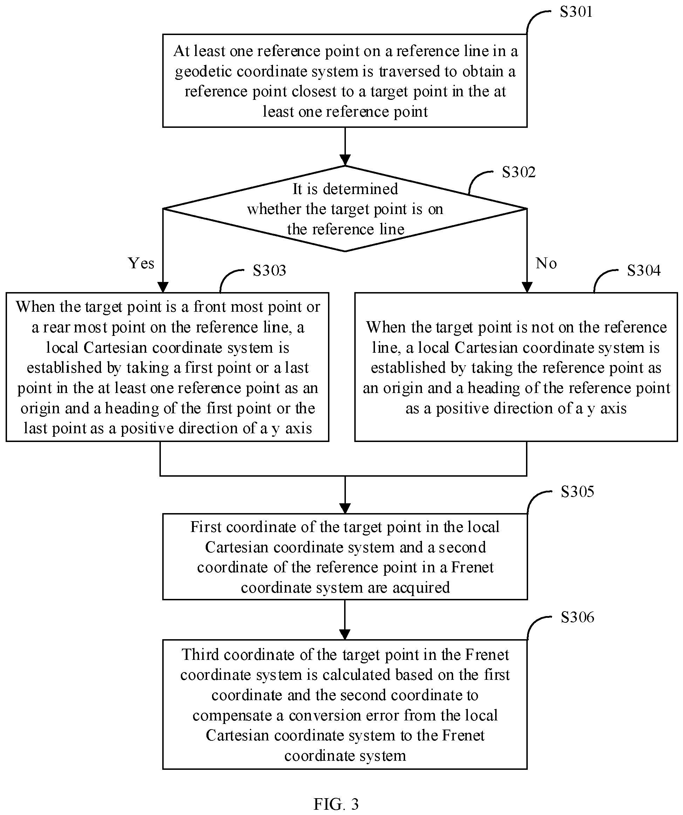

FIG. 3 is a flowchart illustrating an error compensation method according to an embodiment of the present disclosure. The error compensation method of FIG. 3 can be performed by a server. As shown in FIG. 3, the error compensation method includes following steps.

S301, one or more candidate reference points on a reference line in a geodetic coordinate system is traversed to obtain a reference point closest to a target point in the one or more candidate reference points.

S302, it is determined whether the target point is on the reference line. If yes, S303 is performed; otherwise, S304 is performed.

S303, when the target point is a front most point or a rear most point on the reference line, a local Cartesian coordinate system is established by taking a first point or a last point in the one or more candidate reference points as an origin and a heading of the first point or the last point as a positive direction of a y axis; and S305 is continued to be performed.

S304, when the target point is not on the reference line, a local Cartesian coordinate system is established by taking the reference point as an origin and a heading of the reference point as a positive direction of a y axis.

S305, a first coordinate of the target point in the local Cartesian coordinate system and a second coordinate of the reference point in a Frenet coordinate system are acquired.

S306, a third coordinate of the target point in the Frenet coordinate system is calculated based on the first coordinate and the second coordinate to compensate a conversion error from the local Cartesian coordinate system to the Frenet coordinate system.

According to the technical solutions provided by the embodiments of the present disclosure, by traversing one or more candidate reference points on a reference line in a geodetic coordinate system, a reference point closest to a target point in one or more candidate reference points is obtained; when the target point is a front most point or a rear most point on the reference line, a local Cartesian coordinate system is established by taking a first point or a last point in one or more candidate reference points as an origin and a heading of the first point or the last point as a positive direction of a y axis; and when the target point is not on the reference line, a local Cartesian coordinate system is established by taking the reference point as an origin and a heading of the reference point as a positive direction of a y axis; further, a first coordinate of the target point in the local Cartesian coordinate system and a second coordinate of the reference point in a Frenet coordinate system are acquired, and a third coordinate of the target point in the Frenet coordinate system is calculated based on the first coordinate and the second coordinate to compensate a conversion error from the local Cartesian coordinate system to the Frenet coordinate system, the conversion error from the local Cartesian coordinate system to the Frenet coordinate system can be corrected, and the time consumed by the conversion can be reduced.

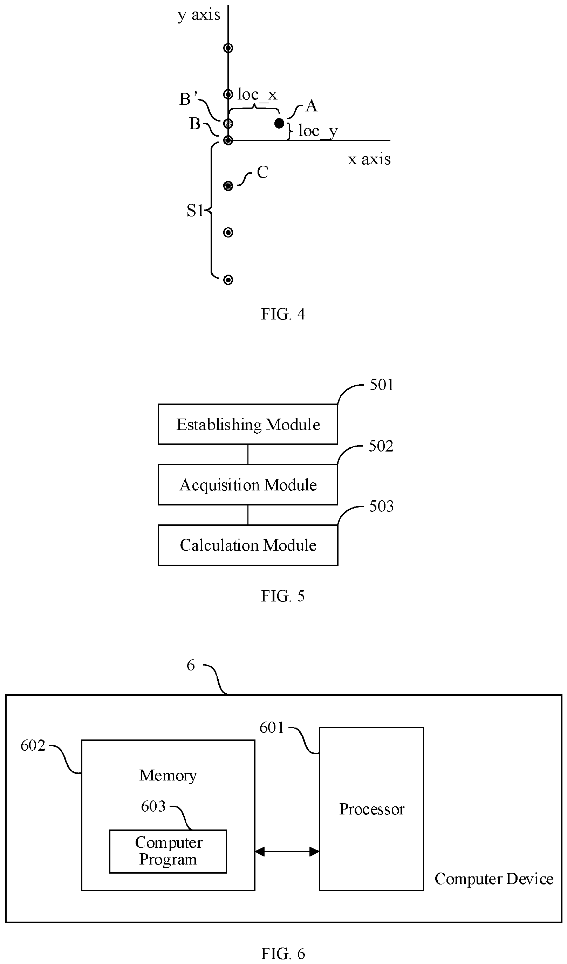

FIG. 4 is a schematic diagram of calculating a coordinate of a target point based on a coordinate of the nearest reference point according to an embodiment of the present disclosure. The following describes a conversion process among coordinate systems in the embodiment of the present disclosure with reference to FIG. 1.

As shown in FIG. 4, it is known that A is the target point, and a geodetic coordinate of the target point A in a geodetic coordinate system is (x1, y1); B is the nearest reference point found through traversal, and a geodetic coordinate and heading of the reference point B in the geodetic coordinate system is (x0, y0, theta0), and the target point A is not on a reference line in the geodetic coordinate system. Further, a local Cartesian coordinate system is established by taking the reference point B as an origin and the heading of the reference point B as a positive direction of a y axis, and a local coordinate (loc_x, loc_y) of the target point A in the local Cartesian coordinate system is calculated through following formulas:

$$loc\_x = (x1 - x0) \times \cos(theta0) + (y1 - y0) \times \sin(theta0);$$

and

$$loc\_y=(y1-y0)\times\cos(theta0)-(x1-x0)\times\sin(theta0).$$

Assuming that the local coordinate (loc x, loc_y) of the target point A is (2, 0.3), and a coordinate (s1, 0) of the reference point B acquired in a Frenet coordinate system is (30, 0). In the related art, a coordinate (s1, 11) of the target point A in the Frenet coordinate system calculated through formulas dis=(loc_x$^2$+loc_y$^2$)$^{0.5}$ and l1=dis is (30, 2.022). In the embodiment of the present disclosure, however, in the conversion process from the local Cartesian coordinate system to the Frenet coordinate system, a coordinate (s2,12) of the target point A in the Frenet coordinate system calculated through formulas s2=s1+loc_y and 12=loc_x based on the local coordinate (2, 0.3) of the target point A and the coordinate (30, 0) of the reference point B is (30.3, 2). As can be seen, according to the present disclosure, the conversion error from the local Cartesian coordinate system to the Frenet coordinate system can be corrected, and the time consumed by the conversion can be reduced.

It should be noted that the technical solutions provided by the embodiments of the present disclosure are also applicable to a scene of a curve.

The following are apparatus embodiments of the present disclosure, which can be used to implement the method embodiments of the present disclosure. For the details that are not disclosed in the apparatus embodiments of the present disclosure, please refer to the method embodiments of the present disclosure.

FIG. 5 is a block diagram illustrating an error compensation apparatus according to an embodiment of the present disclosure. As shown in FIG. 5, the error compensation device includes:

an establishing module 501 configured to establish a first coordinate system based on a reference point closest to a target point;
an acquisition module 502 configured to acquire a first coordinate of the target point in the first coordinate system and a second coordinate of the reference point in a second coordinate system; and
a calculation module 503 configured to calculate a third coordinate of the target point in the second coordinate system based on the first coordinate and the second coordinate to compensate a conversion error from the first coordinate system to the second coordinate system.

According to the technical solutions provided by the embodiments of the present disclosure, by establishing a first coordinate system based on a reference point closest to a target point, acquiring a first coordinate of the target point in the first coordinate system and a second coordinate of the reference point in a second coordinate system, and calculating a third coordinate of the target point in the second coordinate system based on the first coordinate and the second coordinate to compensate a conversion error from the first coordinate system to the second coordinate system, the conversion error from the first coordinate system to the second coordinate system can be corrected, and the time consumed by the conversion can be reduced.

In some embodiments, the establishing module 501 in FIG. 5 is configured to traverse one or more candidate reference points on a reference line in a third coordinate system to obtain the reference point closest to the target point in the one or more candidate reference points; and establish the first coordinate system based on the reference point.

In some embodiments, the establishing module 501 in FIG. 5 is configured to traverse the one or more candidate reference points on the reference line in the third coordinate system one by one; or perform a jump point traversal on the one or more candidate reference points on the reference line in the third coordinate system at an equal interval; or perform a bisection traversal on the one or more candidate reference points on the reference line in the third coordinate system.

In some embodiments, when the target point is not on the reference line, the establishing module 501 in FIG. 5 is configured to establish the first coordinate system by taking the reference point as an origin and a heading of the reference point as a positive direction of a y axis.

In some embodiments, when the target point is a front most point or a rear most point on the reference line, the establishing module 501 in FIG. 5 is configured to establish the first coordinate system by taking a first point or a last point in the one or more candidate reference points as an origin and a heading of the first point or the last point as a positive direction of a y axis.

In some embodiments, the calculation module 503 in FIG. 5 is configured to calculate the third coordinate of the target point in the second coordinate system through following formulas based on the first coordinate and the second coordinate:

$$s2=s1+loc\_y;$$

and

$$l2 = loc\_x,$$

where s2 is an abscissa in the third coordinate of the target point in the second coordinate system, 12 is an ordinate in the third coordinate of the target point in the second coordinate system, s1 is an abscissa in the second coordinate of the reference point in the second coordinate system, loc x is an abscissa in the first coordinate of the target point in the first coordinate system, and loc_y is an ordinate in the first coordinate of the target point in the first coordinate system.

In some embodiments, the first coordinate system is a local Cartesian coordinate system, the second coordinate system is a Frenet coordinate system, and a third coordinate system is a geodetic coordinate system.

It should be understood that a serial number of each step in the above embodiments does not mean an order of execution, and the order of execution of each process should be determined by its function and internal logic, and should not constitute any limitation on the implementation process of the embodiments of the present disclosure.

FIG. 6 is a schematic diagram illustrating a computer device 6 according to an embodiment of the present disclosure. As shown in FIG. 6, the computer device 6 in the embodiment includes a processor 601, a memory 602, and a computer program 603 stored in the memory 602 and executable on the processor 601. When the computer program 603 is executed by the processor 601, the steps in each of the foregoing method embodiments are realized. Alternatively, when the computer program 603 is executed by the processor 601, the functions of each module/unit in the foregoing apparatus embodiments are realized.

Exemplarily, the computer program 603 may be divided into one or more modules/units, and the one or more modules/units are stored in the memory 602 and executed by executed by the processor 601 to realize the present disclosure. The one or more modules/units may be a series of computer program instruction sections capable of performing a specific function, and the computer program instruction sections are used for describing an execution process of the computer program 603 in the computer device 6.

The computer device 6 may be a computing device such as a desktop computer, a notebook, a palm computer or a cloud server. The computer device 6 may include, but is not limited to, the processor 601 and the memory 602. A person skilled in the art may understand that a structure shown in FIG. 6 is only an example of the computer device 6 and does not limit the computer device 6, which may include more or fewer components than those shown in the drawings, or some components may be combined, or a different component deployment may be used. For example, the computer device 6 may further include an input/output device, a network access device, a bus, and the like.

The processor 601 may be a Central Processing Unit (CPU), or other general-purpose processors, Digital Signal Processors (DSPs), Application Specific Integrated Circuits (ASICs), Field-Programmable Gate Arrays (FPGAs) or other programmable logic devices, discrete gates or transistor logic devices, discrete hardware components or the like. The general-purpose processor may be a microprocessor or the processor may be any general processor or the like.

The memory 602 may be an internal storage unit of the computer device 6, for example, a hard disk or memory of the computer device 6. The memory 602 may also be an external storage device of the computer device 6, such as a plug-in hard disk, a Smart Media Card (SMC), a Secure Digital (SD) Card, a Flash Card or the like configured on the computer device 6. Further, the memory 602 may also include both the internal storage unit and the external storage device of the computer device 6. The memory 602 is configured to store the computer program and other programs and data required by the computer device 6. The memory 602 may be further configured to temporarily store data that has been or will be output.

A person skilled in the art may clearly understand that, for the purpose of convenient and brief description, only division of the foregoing function units is used as an example for description. In the practical application, the functions may be allocated to and completed by different function modules according to requirements. That is, an internal structure of the device is divided into different functional units or modules, to complete all or some of the functions described above. Functional units and modules in the embodiments may be integrated into one processing unit, or each of the units may exist alone physically, or two or more units are integrated into one unit. The integrated unit may be implemented in the form of hardware, or may be implemented in the form of a software function unit. In addition, the specific names of each functional unit and module are only for the purpose of distinguishing each other, and are not used to limit the protection scope of the present disclosure. For specific work processes of the units and modules in the system, reference may be made to corresponding processes in the foregoing method embodiments, and details are not described herein again.

In the embodiments, descriptions of the embodiments have different emphases. As for parts that are not described in detail in one embodiment, reference can be made to the relevant descriptions of the other embodiments.

A person of ordinary skill in the art may notice that the exemplary units and algorithm steps described with reference to the embodiments disclosed in this specification can be implemented in electronic hardware, or a combination of computer software and electronic hardware. Whether the functions are performed by hardware or software depends on particular applications and design constraint conditions of the technical solutions. A person skilled in the art may use different methods to implement the described functions for each particular application, but it is not considered that the implementation goes beyond the scope of the present disclosure.

In the embodiments provided in the present disclosure, it is to be understood that the disclosed apparatus and method may be implemented in other manners. For example, the described system embodiment is merely exemplary. For example, the modules and units division are merely logical function division and there may be other division manners during actual implementation. For example, a plurality of units or components may be combined or integrated into another system, or some features may be ignored or not performed. In addition, the displayed or discussed mutual couplings or direct couplings or communications connections may be implemented through some interfaces. The indirect couplings or communications connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected according to actual needs to achieve the objectives of the solutions of the embodiments.

The units described as separate components may or may not be physically separated, and the components displayed as units may or may not be physical units, and may be located in one place or may be distributed over a plurality of network units. Some or all of the units may be selected according to actual needs to achieve the objectives of the solutions of the embodiments.

When the integrated module/unit is implemented in the form of a software functional unit and sold or used as an independent product, the integrated unit may be stored in a computer-readable storage medium. Based on such understanding, all or some of the processes of the methods in the embodiments may be implemented by a computer program instructing relevant hardware. The computer program may be stored in a computer-readable storage medium. During execution of the computer program by the processor, steps in the foregoing method embodiments may be implemented. The computer program includes computer program code. The computer program code may be in source code form, object code form, executable file or some intermediate forms, or the like. The computer-readable medium may include: any entity or apparatus that is capable of carrying the computer program code, a recording medium, a USB flash drive, a removable hard disk, a magnetic disk, an optical disc, a read-only memory (ROM), a random access memory (RAM), an electric carrier signal, a telecommunication signal and a software distribution medium, or the like. The content contained in the computer-readable medium may be appropriately increased or decreased according to the requirements of legislation and patent practice in jurisdictions. For example, in some jurisdictions, according to legislation and patent practice, the computer-readable medium does not include an electric carrier signal and a telecommunication signal.

The foregoing embodiments are merely intended for describing the technical solutions of the present disclosure, but not for limiting the present disclosure. Although the present disclosure is described in detail with reference to the foregoing embodiments, it is to be understood by a person of ordinary skill in the art that they may still make modifications to the technical solutions described in the foregoing embodiments or make equivalent replacements to some technical features thereof, without departing from the spirit and scope of the technical solutions of the embodiments of the present disclosure, which being included in the protection scope of the present disclosure.

**Claims**

1. An error compensation method, comprising:

   establishing a first coordinate system based on a reference point closest to a target point;
   acquiring a first coordinate of the target point in the first coordinate system and a second coordinate of the reference point in a second coordinate system; and
   calculating a third coordinate of the target point in the second coordinate system based on the first coordinate and the second coordinate to compensate a conversion error from the first coordinate system to the second coordinate system.

2. The method according to claim 1, wherein establishing the first coordinate system based on the reference point closest to the target point comprises:

   traversing one or more candidate reference points on a reference line in a third coordinate system to obtain the reference point closest to the target point in the one or more candidate reference points; and
   establishing the first coordinate system based on the reference point.

3. The method according to claim 2, wherein traversing the one or more candidate reference points on the reference line in the third coordinate system comprises any one of:

> traversing the one or more candidate reference points on the reference line in the third coordinate system one by one;
> performing a jump point traversal on the one or more candidate reference points on the reference line in the third coordinate system at an equal interval; or
> performing a bisection traversal on the one or more candidate reference points on the reference line in the third coordinate system.

4. The method according to claim 2, wherein establishing the first coordinate system based on the reference point closest to the target point comprises:
   when the target point is not on the reference line, establishing the first coordinate system by taking the reference point as an origin and a heading of the reference point as a positive direction of a y axis.

5. The method according to claim 2, wherein establishing the first coordinate system based on the reference point closest to the target point comprises:
   when the target point is a front most point or a rear most point on the reference line, establishing the first coordinate system by taking a first point or a last point in the one or more candidate reference points as an origin and a heading of the first point or the last point as a positive direction of a y axis.

6. The method according to claim 1, wherein calculating the third coordinate of the target point in the second coordinate system based on the first coordinate and the second coordinate to compensate the conversion error from the first coordinate system to the second coordinate system comprises:

   > calculating the third coordinate of the target point in the second coordinate system through following formulas based on the first coordinate and the second coordinate:

$$s2 = s1 + loc\_y;$$

> and

$$l2 = loc\_x,$$

> where s2 is an abscissa in the third coordinate of the target point in the second coordinate system, l2 is an ordinate in the third coordinate of the target point in the second coordinate system, s1 is an abscissa in the second coordinate of the reference point in the second coordinate system, loc_x is an abscissa in the first coordinate of the target point in the first coordinate system, and loc_y is an ordinate in the first coordinate of the target point in the first coordinate system.

7. The method according to any one of claims 1 to 6, wherein the first coordinate system is a local Cartesian coordinate system, the second coordinate system is a Frenet coordinate system, and a third coordinate system is a geodetic coordinate system.

8. An error compensation apparatus, comprising:

   > an establishing module configured to establish a first coordinate system based on a reference point closest to a target point;
   > an acquisition module configured to acquire a first coordinate of the target point in the first coordinate system and a second coordinate of the reference point in a second coordinate system; and
   > a calculation module configured to calculate a third coordinate of the target point in the second coordinate system based on the first coordinate and the second coordinate to compensate a conversion error from the first coordinate system to the second coordinate system.

9. A computer device, comprising:

   > a memory;

a processor; and
a computer program stored in the memory and executable on the processor,
wherein the computer program, when executed by the processor, causing the processor to implement the steps of the method according to any one of claims 1 to 7.

10. A computer readable storage medium storing a computer program, wherein the computer program, when executed by a processor, causing the processor to implement the steps of the method according to any one of claims 1 to 7.

FIG. 1

```
                      ◎

        B'⟍    ◎   12
              {‾‾‾}     ⟍A
        B⟍   ○         ●
      {    ◎
      {    {‾‾‾}
      {    11
   s2{  s1{  ◎
      {    {
      {    {  ◎
      {    {
      {    {  ◎
```

FIG. 1

```
                                              ⟋ S201
  ┌──────────────────────────────────────┐
  │  First coordinate system is established based on a reference  │
  │         point closest to a target point        │
  └──────────────────────────────────────┘
                     │
                     ▼                        ⟋ S202
  ┌──────────────────────────────────────┐
  │  First coordinate of the target point in the first coordinate  │
  │  system and a second coordinate of the reference point in a  │
  │        second coordinate system are acquired       │
  └──────────────────────────────────────┘
                     │
                     ▼                        ⟋ S203
  ┌──────────────────────────────────────┐
  │  Third coordinate of the target point in the second coordinate  │
  │   system is calculated based on the first coordinate and the  │
  │  second coordinate to compensate a conversion error from the  │
  │  first coordinate system to the second coordinate system  │
  └──────────────────────────────────────┘
```

FIG. 2

S301

At least one reference point on a reference line in a geodetic coordinate system is traversed to obtain a reference point closest to a target point in the at least one reference point

S302

It is determined whether the target point is on the reference line

Yes

S303

No

S304

When the target point is a front most point or a rear most point on the reference line, a local Cartesian coordinate system is established by taking a first point or a last point in the at least one reference point as an origin and a heading of the first point or the last point as a positive direction of a y axis

When the target point is not on the reference line, a local Cartesian coordinate system is established by taking the reference point as an origin and a heading of the reference point as a positive direction of a y axis

S305

First coordinate of the target point in the local Cartesian coordinate system and a second coordinate of the reference point in a Frenet coordinate system are acquired

S306

Third coordinate of the target point in the Frenet coordinate system is calculated based on the first coordinate and the second coordinate to compensate a conversion error from the local Cartesian coordinate system to the Frenet coordinate system

FIG. 3

FIG. 4

FIG. 5

FIG. 6

## INTERNATIONAL SEARCH REPORT

| International application No. |
| --- |
| **PCT/CN2021/111408** |

| | |
| --- | --- |
| **A. CLASSIFICATION OF SUBJECT MATTER** | |
| B60W 60/00(2020.01)i; G05D 1/02(2020.01)i | |
| According to International Patent Classification (IPC) or to both national classification and IPC | |

**B. FIELDS SEARCHED**

Minimum documentation searched (classification system followed by classification symbols)

G05D; B60W; B60R; G01S

Documentation searched other than minimum documentation to the extent that such documents are included in the fields searched

Electronic data base consulted during the international search (name of data base and, where practicable, search terms used)

CNABS, CNTXT, CNKI, VEN: 坐标, 坐标系, 变换, 换算, 转换, 误差, 偏差, 修正, 补偿, 校正, 参考点, Frenet, 弗莱纳, coordinator, system, transform+, convers+, error, deviation, compensation , Reference point, target point

**C. DOCUMENTS CONSIDERED TO BE RELEVANT**

| Category* | Citation of document, with indication, where appropriate, of the relevant passages | Relevant to claim No. |
| --- | --- | --- |
| PX | CN 113050660 A (NEOLIX TECHNOLOGIES CO., LTD.) 29 June 2021 (2021-06-29) entire document | 1-10 |
| A | JP 0688706 A (NIPPON TELEGRAPH & TELEPHONE CORP.) 29 March 1994 (1994-03-29) descriptions [0002-0105], and figures 1-7 | 1-10 |
| A | CN 112346465 A (HARBIN ENGINEERING UNIVERSITY) 09 February 2021 (2021-02-09) entire document | 1-10 |
| A | CN 112612268 A (WUHAN POLYTECHNIC UNIVERSITY) 06 April 2021 (2021-04-06) entire document | 1-10 |
| A | KR 101624705 B1 (RIVER WATER et al.) 26 May 2016 (2016-05-26) entire document | 1-10 |

☐ Further documents are listed in the continuation of Box C.    ☑ See patent family annex.

| | | |
| --- | --- | --- |
| * | Special categories of cited documents: | |
| "A" | document defining the general state of the art which is not considered to be of particular relevance | "T" later document published after the international filing date or priority date and not in conflict with the application but cited to understand the principle or theory underlying the invention |
| "E" | earlier application or patent but published on or after the international filing date | "X" document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | |
| "P" | document published prior to the international filing date but later than the priority date claimed | "&" document member of the same patent family |

| Date of the actual completion of the international search | Date of mailing of the international search report |
| --- | --- |
| **26 February 2022** | **04 March 2022** |

| Name and mailing address of the ISA/CN | Authorized officer |
| --- | --- |
| **China National Intellectual Property Administration (ISA/CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

INTERNATIONAL SEARCH REPORT
Information on patent family members

International application No.

**PCT/CN2021/111408**

| Patent document cited in search report | | | Publication date (day/month/year) | Patent family member(s) | | | Publication date (day/month/year) |
|---|---|---|---|---|---|---|---|
| CN | 113050660 | A | 29 June 2021 | None | | | |
| JP | 0688706 | A | 29 March 1994 | JP | H0688706 | A | 29 March 1994 |
| | | | | JP | 2726366 | B2 | 11 March 1998 |
| CN | 112346465 | A | 09 February 2021 | None | | | |
| CN | 112612268 | A | 06 April 2021 | None | | | |
| KR | 101624705 | B1 | 26 May 2016 | None | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202110606057